(19) Europäisches Patentamt / European Patent Office / Office européen des brevets

(11) **EP 4 714 906 A2**

(12) **EUROPEAN PATENT APPLICATION**

(43) Date of publication:
25.03.2026 Bulletin 2026/13

(51) International Patent Classification (IPC):
*C01G 53/506* (2025.01)    *H01M 4/36* (2006.01)
*H01M 4/525* (2010.01)

(21) Application number: 25199976.9

(22) Date of filing: 03.09.2025

(52) Cooperative Patent Classification (CPC):
**C01G 53/506; H01M 4/366; H01M 4/525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 03.09.2024 KR 20240119575
01.09.2025 KR 20250123265

(71) Applicant: **SAMSUNG SDI CO., LTD.**
**Yongin-si, Gyeonggi-do 17084 (KR)**

(72) Inventors:
• **HONG, Youngjae**
**17084 Yongin-si (KR)**
• **JANG, Jungsue**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, AND METHOD OF PREPARING THE SAME**

(57)    The present application relates to a positive electrode active material for a rechargeable lithium battery, and a method for preparing a positive electrode active material for a rechargeable lithium battery, the positive electrode active material including: a core particle comprising a lithium nickel-based composite oxide represented by Chemical Formula 11; and a coating layer located on a surface of the core particle and comprising one element or a combination thereof selected from the group consisting of Al, B, Ba, Ca, Ce, Co, Cr, Cu, Fe, Mg, Mn, Mo, Nb, Si, Sn, Sr, Ti, V, W, Y, Zn, and Zr, wherein the positive electrode active material has a value defined by Mathematical Formula 1 of greater than or equal to about 5.

Chemical Formula 11        $Li_{a11}Ni_{x11}M^{11}_{y11}M^{12}_{z11}O_{2-b11}X_{b11}$

wherein, in Chemical Formula 11, $0.9 \leq a11 \leq 1.2$, $0.3 \leq x11 < 1$, $0 < y11 \leq 0.7$, $0 \leq z11 \leq 0.7$, $0.9 \leq x11+y11+z11 \leq 1.1$, and $0 \leq b11 \leq 0.11$, $M^{11}$ and $M^{12}$ are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S,

Mathematical Formula 1

$$\Sigma[Mx \,(EP\text{-}EDS)/ \, Mx \,(ICP)]$$

wherein Mx denotes a metal component contained in the coating layer, Mx (EP-EDS) denotes a mol% of the metal component Mx relative to total metals excluding lithium, present on the surface of the positive electrode active material as measured by Electron Probe - Energy Dispersive Spectroscopy (EP-EDS), and Mx (ICP) denotes a mol% of the metal component Mx relative to total metals excluding lithium, present in the entirety (surface and core) of the positive electrode active material as measured by Inductively Coupled Plasma analysis.

EP 4 714 906 A2

# FIG. 1

**Description**

**BACKGROUND**

**1. Field**

A method for preparing a positive electrode active material for a rechargeable lithium battery is disclosed.

**2. Description of the Related Art**

Rechargeable lithium batteries are widely used as a driving power source for mobile information terminals such as smart phones and laptops because they are easy to carry while implementing high energy density. Recently, rechargeable lithium batteries having high capacity, long cycle-life, and high power are being actively studied for use as power sources for hybrid and/or electric vehicles, and/or as power storage power sources.

As a positive electrode active material for the rechargeable lithium batteries, lithium nickel-based composite oxides having high energy density and realizing high capacity are attracting attention. However, such lithium nickel-based composite oxides form residual lithium such as LiOH and $Li_2CO_3$ on a surface of the positive electrode active material (lithium nickel-based composite oxide) during manufacturing. Rechargeable lithium batteries manufactured by using the positive electrode active material including the residual lithium have a problem that cell stability is deteriorated by carbon dioxide generated during the long-term charging and discharging.

Accordingly, in order to reduce the residual lithium, the surface of the positive electrode active material has been additionally washed after manufacturing.

However, this washing may cause structural damage and structural damage and structural deterioration to the positive electrode active material.

Accordingly, a method for preparing a positive electrode active material capable of minimizing or reducing the structural damage and structural damage and structural deterioration, while improving capacity and cycle-life of a battery, is required or desired.

**SUMMARY**

Some example embodiments of the present disclosure provide a positive electrode active material and a method for preparing the same that can improve the capacity and cycle-life of a battery while minimizing or reducing structural damage and structural damage and structural deterioration due to washing.

Some example embodiments provide a positive electrode active material for a rechargeable lithium battery comprising: a core particle comprising a lithium nickel-based composite oxide represented by Chemical Formula 11; and a coating layer located on a surface of the core particle and comprising one element or a combination thereof selected from the group consisting of Al, B, Ba, Ca, Ce, Co, Cr, Cu, Fe, Mg, Mn, Mo, Nb, Si, Sn, Sr, Ti, V, W, Y, Zn, and Zr, wherein the positive electrode active material has a value defined by Mathematical Formula 1 of greater than or equal to about 5:

$$\text{Chemical Formula 11} \qquad Li_{a11}Ni_{x11}M^{11}{}_{y11}M^{12}{}_{z11}O_{2-b11}X_{b11}$$

wherein, in Chemical Formula 11, $0.9 \leq a11 \leq 1.2$, $0.3 \leq x11 < 1$, $0 < y11 \leq 0.7$, $0 \leq z11 \leq 0.7$, $0.9 \leq x11+y11+z11 \leq 1.1$, and $0 \leq b11 \leq 0.11$, $M^{11}$ and $M^{12}$ are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S,

$$\text{Mathematical Formula 1}$$

$$\Sigma[Mx\ (EP\text{-}EDS)/\ Mx\ (ICP)]$$

wherein Mx denotes a metal component contained in the coating layer, Mx (EP-EDS) denotes a mol% of the metal component Mx relative to total metals excluding lithium, present on the surface of the positive electrode active material as measured by Electron Probe - Energy Dispersive Spectroscopy (EP-EDS), and Mx (ICP) denotes a mol% of the metal component Mx relative to total metals excluding lithium, present in the entirety (surface and core) of the positive electrode active material as measured by Inductively Coupled Plasma analysis.

Some example embodiments provide a method for preparing a positive electrode active material for a rechargeable lithium battery including mixing a nickel-based composite hydroxide and a first lithium compound to prepare a first mixture; subjecting the first mixture to a first heat treatment to obtain a first lithium nickel-based composite oxide; washing the first lithium nickel-based composite oxide with an aqueous solvent; mixing the first lithium nickel-based composite oxide and a second lithium compound after washing, to prepare a second mixture; and subjecting the second mixture to a second heat treatment to obtain a positive electrode active material; wherein after the washing, the first lithium nickel-based composite oxide has a Brunauer-Emmett-Teller (BET) specific surface area of about $0.3\ m^2/g$ to about $2.0\ m^2/g$ and a porosity of about $0.01\ cm^3/g$ to about $0.15\ cm^3/g$.

Some example embodiments provide a rechargeable lithium battery including a positive electrode including a positive electrode current collector, and a positive electrode active material layer on the positive electrode current collector, wherein the positive electrode active material layer includes a positive electrode active material prepared according to the aforementioned method for preparing the positive electrode active material, a negative electrode, and an electrolyte.

At least some of the above and other features of the invention are set out in the claims.

The positive electrode active material and the method for preparing the same according to some example embodiments can improve the capacity and cycle-life of a battery while minimizing or reducing structural damage and structural damage and structural deterioration due to washing.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

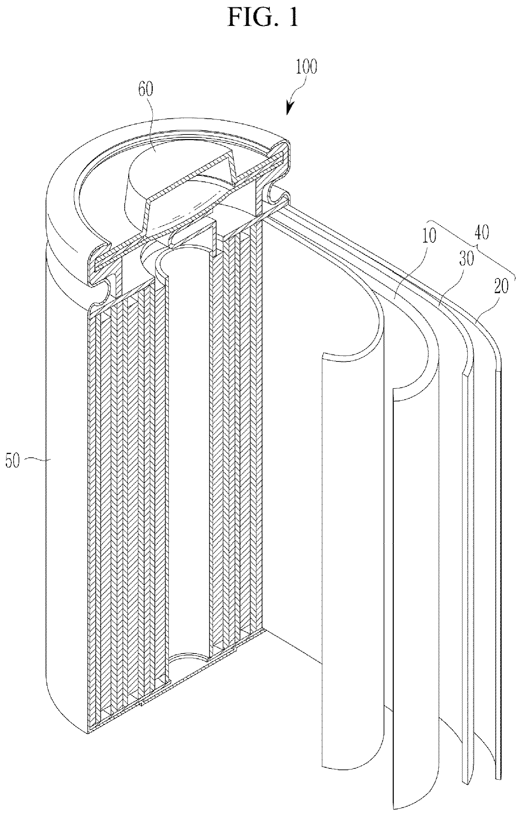

FIGS. 1 to 4 are schematic views illustrating rechargeable lithium batteries according to some example embodiments.

## DETAILED DESCRIPTION

Hereinafter, example embodiments will be described in more detail so that those of ordinary skill in the art can easily implement them. However, the subject matter of this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

In embodiments, it should be understood that terms such as "comprises," "includes," or "have" are intended to designate the presence of an embodied feature, number, step, element, or a combination thereof, but they do not preclude the possibility of the presence or addition of one or more other features, numbers, steps, elements, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, the term "layer" as used herein includes not only a shape on the whole surface if (e.g., when) viewed from a plan view, but also a shape on a partial surface.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter ($D_{50}$) may mean the diameter of particles having a cumulative volume of 50 volume% in the particle size distribution. As used herein, if (e.g., when) a definition is not otherwise provided, the average particle diameter ($D_{50}$) means a diameter of particles having a cumulative volume of 50 volume% in the particle size distribution that is obtained by measuring the size (diameter or major axis length) of about 20 particles at random in a scanning electron microscope image.

In embodiments, the term "or" is not to be construed as an exclusive meaning, for example, "A or B" is construed to include A, B, A+B, and/or the like.

In embodiments, the term "metal" is interpreted as a concept including ordinary metals, transition metals and metalloids (semi-metals).

## Method of Preparing Positive Electrode Active Material for Rechargeable Lithium Battery

In some example embodiments, a method for preparing a positive electrode active material for a rechargeable lithium battery includes mixing a nickel-based composite hydroxide and a first lithium compound to prepare a first mixture; subjecting the first mixture to a first heat treatment to obtain a first lithium nickel-based composite oxide; washing the first lithium nickel-based composite oxide with an aqueous solvent; mixing the first lithium nickel-based composite oxide and a second lithium compound after washing, to prepare a second mixture; and subjecting the second mixture to a second heat treatment to obtain a positive electrode active material; wherein after the washing, the first lithium nickel-based composite oxide has a Brunauer-Emmett-Teller (BET) specific surface area of about $0.3\,m^2/g$ to about $2.0\,m^2/g$ and a porosity of about $0.01\,cm^3/g$ to about $0.15\,cm^3/g$.

In other methods, if (e.g., when) the lithium nickel-based composite oxide is used to manufacture a positive electrode active material, because residual lithium is formed on the surface, a rechargeable lithium battery including the same has a problem that cell stability is deteriorated by carbon dioxide generated during the long-term charging and discharging, and in order to improve this problem, washing is performed after manufacturing the positive electrode active material. The washing has an advantage of removing the residual lithium but a problem of causing structural damage and structural damage and structural deterioration. The washing may not ideally remove lithium compounds such as $Li_2CO_3$, LiOH, and/or the like alone on the surface of the positive electrode active material particle but remove even active lithium inside the positive electrode active material, which may cause a change in the crystal structure and/or a phase transition as well as decrease reversible capacity, thereby deteriorating performance. For example, as lithium is eluted, a lithium nickel-based composite oxide and/or the like may be changed to a nickel-oxide and/or the like, for example, NiO, resultantly bringing about a type (or kind) of reduction reaction in which the oxidation number of Ni is lowered from 3+ to 2+. The compounds such as NiO and/or the like may not be converted again to lithium-containing compounds, which may not only decrease the reversible capacity but also promote a side reaction of the surface of the positive electrode active material particle with an electrolyte, resultantly deteriorating overall performance of the rechargeable lithium battery.

A method for preparing a positive electrode active material according to some example embodiments may improve cell capacity and cycle-life of a rechargeable lithium battery compared to a comparative positive electrode active material preparing method by controlling washing conditions, and/or the like, to minimize or reduce structural damage and structural damage and structural deterioration and by controlling an amount of a lithium compound post-added to lithium nickel-based composite oxide after washing to restore the structural damage and structural deterioration caused by washing.

The nickel-based composite hydroxide may be represented by Chemical Formula 1.

$$\text{Chemical Formula 1} \qquad Ni_{x1}M^1_{y1}M^2_{z1}(OH)_2$$

In Chemical Formula 1, $0.3 \leq x1 < 1$, $0 < y1 \leq 0.7$, $0 \leq z1 \leq 0.7$, and $0.9 \leq x1+y1+z1 \leq 1.1$, and $M^1$ and $M^2$ are each independently one or more elements selected from Al, B, Ba, Ca, Ce, Co, Cr, Cu, Fe, Mg, Mn, Mo, Nb, Si, Sn, Sr, Ti, V, W, Y, Zr, and Zn.

In Chemical Formula 1, for example, $0.3 \leq x1 \leq 0.99$, $0.01 \leq y1 \leq 0.7$, and $0 \leq z1 \leq 0.69$; $0.6 \leq x1 < 1$, $0 < y1 \leq 0.4$, and $0 \leq z1 \leq 0.4$; $0.7 \leq x1 < 1$, $0 < y1 \leq 0.3$, and $0 \leq z1 \leq 0.3$; $0.8 \leq x1 < 1$, $0 < y1 \leq 0.2$, and $0 \leq z1 \leq 0.2$; or $0.9 \leq x1 < 1$, $0 < y1 \leq 0.1$, and $0 \leq z1 \leq 0.1$.

The nickel-based composite hydroxide may be, for example, represented by Chemical Formula 2 or 3.

$$\text{Chemical Formula 2} \qquad Ni_{x2}Co_{y2}M^3_{z2}(OH)_2$$

In Chemical Formula 2, $0.3 \leq x2 < 1$, $0 < y2 \leq 0.7$, $0 \leq z2 \leq 0.7$, and $0.9 \leq x2+y2+z2 \leq 1.1$, and $M^3$ is one or more elements selected from Al, B, Ba, Ca, Ce, Cr, Cu, Fe, Mg, Mn, Mo, Nb, Si, Sn, Sr, Ti, V, W, Y, Zr, and Zn.

In Chemical Formula 2, for example, $0.3 \leq x2 \leq 0.99$, $0.01 \leq y2 \leq 0.7$, and $0 \leq z2 \leq 0.69$; $0.6 \leq x2 < 1$, $0 < y2 \leq 0.4$, and $0 \leq z2 \leq 0.4$; $0.7 \leq x2 < 1$, $0 < y2 \leq 0.3$, and $0 \leq z2 \leq 0.3$; $0.8 \leq x2 < 1$, $0 < y2 \leq 0.2$, and $0 \leq z2 \leq 0.2$; or $0.9 \leq x2 < 1$, $0 < y2 \leq 0.1$, and $0 \leq z2 \leq 0.1$.

$$\text{Chemical Formula 3} \qquad Ni_{x3}Co_{y3}M^4_{z3}M^5_{w3}(OH)_2$$

In Chemical Formula 3, $0.3 \leq x3 \leq 0.98$, $0.01 \leq y3 \leq 0.69$, $0.01 \leq z3 \leq 0.69$, $0 \leq w3 \leq 0.68$, $0.9 \leq x3+y3+z3+w3 \leq 1.1$, $M^4$ is one or more elements selected from Al, and Mn, and $M^5$ is one or more elements selected from B, Ba, Ca, Ce, Cr, Fe, Mg, Mo, Nb, Si, Sn, Sr, Ti, V, W, Y, Zr, and Zn.

In Chemical Formula 3, for example, $0.6 \leq x3 \leq 0.98$, $0.01 \leq y3 \leq 0.39$, $0.01 \leq z3 \leq 0.39$, and $0 \leq w3 \leq 0.38$; $0.8 \leq x3 \leq 0.98$, $0.01 \leq y3 \leq 0.18$, $0.01 \leq z3 \leq 0.18$, and $0 \leq w3 \leq 0.18$; or $0.9 \leq x3 \leq 0.98$, $0.01 \leq y3 \leq 0.08$, $0.01 \leq z3 \leq 0.08$, and $0 \leq w3 \leq 0.08$.

The nickel-based composite hydroxide may include a high concentration of nickel. For example, in the nickel-based composite hydroxide, the nickel content may be greater than or equal to about 80 mol%, and in other examples, greater than or equal to about 81 mol%, greater than or equal to about 82 mol%, greater than or equal to about 83 mol%, greater than or equal to about 84 mol%, greater than or equal to about 85 mol%, greater than or equal to about 89 mol%, greater than or equal to about 90 mol%, greater than or equal to about 91 mol%, or greater than or equal to about 92 mol%, and may be less than or equal to about 100 mol%, less than or equal to about 99 mol%, or less than or equal to about 95 mol% based on 100 mol% of the total metal.

The nickel-based composite hydroxide is in the form of secondary particles formed by agglomeration of a plurality of primary particles, and the average particle diameter ($D_{50}$) of the secondary particles may be, for example, about 1 $\mu$m to about 25 $\mu$m, about 2 $\mu$m to about 20 $\mu$m, about 5 $\mu$m to about 18 $\mu$m, or about 8 $\mu$m to about 16 $\mu$m. In embodiments, the average particle diameter ($D_{50}$) means a size of particles having a cumulative volume of 50 volume% in the particle size distribution that is obtained by measuring the size of about 20 particles at random from a scanning electron microscope image.

The first lithium compound may be, for example, $Li_2CO_3$, LiOH, LiF, a hydrate thereof, or a combination thereof.

The nickel-based composite hydroxide and the first lithium compound may be mixed so that the molar ratio of lithium from the first lithium compound to the total metal of the nickel-based composite hydroxide is about 0.9 to about 1.1, or about 1 to about 1.05. If (e.g., when) the molar ratio of lithium from the first lithium compound to the total metal of the nickel-based composite hydroxide is adjusted within the above range, a first lithium nickel-based composite oxide having structural stability and high lithium available capacity can be obtained.

A first mixture is prepared by mixing the nickel-based composite hydroxide and a first lithium compound, and a first lithium nickel-based composite oxide may be obtained by first heat treatment of the first mixture, and phase transformation and grain growth occur through the first heat treatment.

The first heat treatment may be performed in an oxidizing gas atmosphere, and the temperature thereof is not specifically limited, but may be, for example, about 600 °C to about 1200 °C, about 600 °C to about 1100 °C, about 600 °C to about 1000 °C, about 600 °C to about 900 °C, about 600 °C to about 800 °C, or about 700 °C to about 800 °C. In embodiments, the term oxidizing gas atmosphere means an oxidizing gas such as oxygen and/or air, and for example, the oxidizing gas atmosphere may be composed of an oxygen atmosphere having greater than or equal to about 90 volume% of oxygen.

The first heat treatment time may be suitably or appropriately adjusted depending on the first heat treatment temperature, and may be performed for, for example, about 8 to about 20 hours, about 10 to about 18 hours, or about 12 to about 16 hours.

The BET specific surface area of the first lithium nickel-based composite oxide before washing may be about 0.1 $m^2$/g to about 0.4 $m^2$/g. For example, it may be greater than or equal to about 0.1 $m^2$/g, greater than or equal to about 0.15 $m^2$/g, greater than or equal to about 0.2 $m^2$/g, greater than or equal to about 0.25 $m^2$/g, or greater than or equal to about 0.3 $m^2$/g, and may be less than or equal to about 0.4 $m^2$/g, less than or equal to about 0.39 $m^2$/g, less than or equal to about 0.38 $m^2$/g, less than or equal to about 0.37 $m^2$/g, less than or equal to about 0.36 $m^2$/g, less than or equal to about 0.35 $m^2$/g, less than or equal to about 0.34 $m^2$/g, less than or equal to about 0.33 $m^2$/g, less than or equal to about 0.32 $m^2$/g, less than or equal to about 0.31 $m^2$/g, or less than or equal to about 0.3 $m^2$/g. For example, the BET specific surface area of the first lithium nickel-based composite oxide before washing may be about 0.15 $m^2$/g to about 0.4 $m^2$/g, about 0.2 $m^2$/g to about 0.4 $m^2$/g, or about 0.25 $m^2$/g to about 0.35 $m^2$/g. The BET specific surface area may be measured by the nitrogen gas adsorption method using a specific surface area measuring apparatus HM model-1208 manufactured by MOUNTECH.

The first lithium nickel-based composite oxide may be in the form of secondary particles formed by agglomeration of a plurality of primary particles, and the average particle diameter ($D_{50}$) of the secondary particles may be, for example, about 1 $\mu$m to about 25 $\mu$m, about 2 $\mu$m to about 20 $\mu$m, about 5 $\mu$m to about 18 $\mu$m, or about 8 $\mu$m to about 16 $\mu$m. In embodiments, the term average particle diameter ($D_{50}$) may mean a size of particles having a cumulative volume of 50 volume% in the particle size distribution that is obtained by measuring the size of about 20 particles at random from a scanning electron microscope image.

In embodiments, the preparing method further includes washing the first lithium nickel-based composite oxide obtained by the first heat treatment with an aqueous solvent. The aqueous solvent may be water.

The washing may include mixing the first lithium nickel-based composite oxide in water and drying it. During this process, residual lithium may be removed. A method for preparing a positive electrode active material according to some example embodiments can improve the capacity and cycle-life of a battery by removing residual lithium while minimizing or reducing structural damage and structural damage and structural deterioration by suitably or appropriately controlling the washing conditions.

The washing may be performed by suitably or appropriately adjusting the amount of water.

An amount of water during the washing may be less than about 100 parts by weight based on 100 parts by weight of the first lithium nickel-based composite oxide. For example, An amount of water during the washing may be about 10 to about 90 parts, about 20 to about 80 parts, about 30 to about 60 parts, about 40 to about 60 parts, or about 50 parts by weight based on 100 parts by weight of the first lithium nickel-based composite oxide. By ensuring that the amount of water used during washing satisfies the aforementioned range, structural damage and structural damage and structural deterioration during washing may be minimized or reduced.

The washing may be performed for about 1 to about 30 minutes, about 2 to about 30 minutes, about 3 to about 30 minutes, about 4 to about 30 minutes, or about 5 to about 30 minutes, provided that the amount of water satisfies the above requirement. If (e.g., when) washing is performed for the above-mentioned time under the conditions that the amount of water described above is satisfied, structural damage and structural damage and structural deterioration due to washing can be minimized or reduced if (e.g., when) washing is performed within the time range described above.

A method for preparing a positive electrode active material according to some example embodiments controls the amount of water during washing within the aforementioned range, such that the first lithium nickel-based composite oxide after the washing satisfies the BET specific surface area and porosity ranges described below, thereby minimizing or reducing structural damage and structural damage and structural deterioration, and removing residual lithium. Furthermore, a rechargeable lithium battery comprising the positive electrode active material prepared using the first lithium nickel-based composite oxide subjected to the washing process as described above can improve the capacity and cycle-life.

The BET specific surface area of the first lithium nickel-based composite oxide after the washing may be about about 0.3 $m^2$/g to about 2 $m^2$/g. For example, the BET specific surface area of the first lithium nickel-based composite oxide after the washing may be about 0.4 $m^2$/g to about 2 $m^2$/g, about 0.5 $m^2$/g to about 2 $m^2$/g, about 0.6 $m^2$/g to about 2 $m^2$/g, about 0.7 $m^2$/g to about 2 $m^2$/g, about 0.8 $m^2$/g to about 2 $m^2$/g, about 0.9 $m^2$/g to about 2 $m^2$/g, about 1 $m^2$/g to about 2 $m^2$/g, about 1 $m^2$/g to about 1.8 $m^2$/g, about 1 $m^2$/g to about 1.6 $m^2$/g, or about 1.2 $m^2$/g to about 1.4 $m^2$/g. The BET specific surface area may be measured by the nitrogen gas adsorption method using a specific surface area measuring apparatus HM model-1208 manufactured by MOUNTECH. The BET specific surface area can be used as an indicator representing the degree of structural damage to the active material occurring during the washing process. Pores are formed inside the structure of the first lithium nickel-based composite oxide during washing, which increases the BET specific surface area; thus, a larger BET specific surface area value may indicate a more severe degree of structural damage.

The porosity of the first lithium nickel-based composite oxide after the washing is about 0.01 to about 0.15 $cm^3$/g. For example, the porosity of the first lithium nickel-based composite oxide after the washing may be about 0.01 to about 0.12 $cm^3$/g, about 0.01 to about 0.1 $cm^3$/g, about 0.05 to about 0.1 $cm^3$/g, or about 0.06 to about 0.08 $cm^3$/g. For example, the porosity may be measured by performing nitrogen adsorption using a measuring apparatus BELSORP-max from Microtrac Co., Ltd., analyzing the pore distribution in the range of pore diameters from about 2 nm to about 300 nm by the BJH method, and calculating the porosity value. The porosity may be used as an indicator representing the degree of structural damage of the active material caused during the washing process, similarly to the BET specific surface area described above. A higher porosity may indicate that the first lithium nickel-based composite oxide has experienced greater structural damage due to washing.

The cation mixing value of the first lithium nickel-based composite oxide after the washing may be less than or equal to about 2%. For example, the cation mixing value of the first lithium nickel-based composite oxide after the washing may be about 1% to about 2%, about 1% to about 1.8%, about 1% to about 1.6%, about 1% to about 1.4%, or about 1.2% to about 1.4%. The cation mixing refers to a phenomenon in which $Li^+$ (0.76 Å) and $Ni^{2+}$ (0.69 Å), which have similar ionic radii, swap sites thereof to form a crystal. For example, because nickel tends to prefer a valence of divalent over trivalent, a problem occurs in which nickel ions ($Ni^{2+}$) with a valence of divalent and similar to lithium ions are mixed into the empty space of the lithium layer where lithium deficiency occurs due to volatilization of the raw material lithium salt during high-temperature firing, resulting in the production of lithium nickel-based composite oxide having a non-stoichiometric composition. In embodiments, $Ni^{2+}$ mixed into the lithium layer not only hinders the diffusion of lithium ions, but also significantly increases the irreversibility of the ion redox reaction of the battery, which causes a problem of reduced capacity of the rechargeable lithium battery. The cation mixing value can be satisfied by suitably or appropriately controlling the amount of water if (e.g., when) washing the first lithium nickel-based composite oxide. The cation mixing (%) refers to a ratio (%) of nickel ions ($Ni^{2+}$) mixed into lithium sites (Li sites), and may be calculated by measuring using X-ray diffraction (XRD) analysis. For example, the above cation mixing may be calculated by performing X-ray diffraction (XRD) analysis using Cu-K$\alpha$ on the first lithium nickel-based composite oxide after washing, obtaining a profile, and then calculating it through Rietveld refinement. By suitably or appropriately controlling the amount of water during the washing, the first lithium nickel-based composite oxide after the washing may satisfy the aforementioned cation mixing value.

The residual lithium content in the first lithium nickel-based composite oxide after the washing may be greater than or equal to about 0.1 wt% based on 100 wt% of the first lithium nickel-based composite oxide after the washing. For example, the residual lithium content in the first lithium nickel-based composite oxide after the washing may be about 0.1 to about 0.2 wt%, about 0.1 to about 0.15 wt%, about 0.1 to about 0.13 wt%, or about 0.1 to about 0.12 wt% based on 100 wt% of the first lithium nickel-based composite oxide after the washing. The residual lithium content in the first lithium nickel-based composite oxide after the washing can be measured by acid-base titration using diluted hydrochloric acid (HCl). By adjusting the residual lithium content in the first lithium nickel-based composite oxide after the washing within the above range, a rechargeable lithium battery comprising the positive electrode active material prepared using the first lithium nickel-based composite oxide subjected to the washing process as described above can improve the capacity and cycle-life. The first lithium nickel-based composite oxide after the washing can satisfy the above range of residual lithium content by appropriately controlling the amount of water during washing.

The electrical conductivity of the first lithium nickel-based composite oxide after the washing may be less than or equal to about 0.22 S/cm. For example, the electrical conductivity of the first lithium nickel-based composite oxide after the washing may be about 0.1 to about 0.22 S/cm, about 0.15 to about 0.21 S/cm, or about 0.18 to about 0.21 S/cm. The electrical conductivity may be measured by measuring the resistivity (e.g., electrical resistivity) of the powder using a powder resistance measuring device after washing the first lithium nickel-based composite oxide, and converting a reciprocal value of the measured resistivity into the value of electrical conductivity. For example, the electrical conductivity of the first lithium nickel-based composite oxide after the washing may be obtained by measuring the resistivity at a point where a powder density of the first lithium nickel-based composite oxide after the washing reaches 3.3 g/cc using a powder resistance measuring device, and then calculating the reciprocal thereof. By suitably or appropriately controlling the amount of water during the washing, the structural change to a rock salt structure may be suppressed or reduced, and the first lithium nickel-based composite oxide after the washing may satisfy the aforementioned electrical conductivity.

The preparing method includes mixing the first lithium nickel-based composite oxide and a second lithium compound after washing, to prepare a second mixture, subjecting the second mixture to a second heat treatment to obtain a positive electrode active material. A method for preparing a positive electrode active material according to some example embodiments may restore structural damage and structural damage and structural deterioration caused by washing by additionally adding a second lithium compound after washing, thereby improving the capacity and cycle-life of a battery.

The second lithium compound may be, for example, $Li_2CO_3$, LiOH, LiF, a hydrate thereof, or a combination thereof. The second lithium compound may be the same as or different from the first lithium compound.

The first lithium nickel-based composite oxide and the second lithium compound may be mixed so that lithium of the second lithium compound is present in an amount of less than or equal to about 10 parts by mole to about 5 parts by mole based on 100 parts by mole of total metals excluding lithium in the first lithium nickel-based composite oxide after the washing. For example, the lithium of the second lithium compound may be mixed in an amount of about 0.1 to about 10 parts by mole, about 0.5 to about 7 parts by mole, about 1 to about 8 parts by mole, or about 1 to about 5 parts by mole, based on 100 parts by mole of the total metal excluding lithium in the first lithium nickel-based composite oxide. By mixing a second lithium compound into the first lithium nickel-based composite oxide within the aforementioned ranges after washing, structural damage and structural deterioration caused by washing can be restored, thereby improving the capacity and cycle-life of the rechargeable lithium battery. By adjusting the addition amount of the second lithium compound within the aforementioned range, structural damage and structural degradation caused by washing can be restored, thereby preventing a decrease in electrical conductivity. The addition amount of the second lithium compound may vary depending on whether a coating material is added during the secondary heat treatment described below. For example, the second lithium compound may be added in a larger amount when the coating material is added during the secondary heat treatment than when it is not.

The second heat treatment may be performed in an oxidizing gas atmosphere, and the temperature thereof is not specifically limited, but may be performed within a range of, for example, about 600 °C to about 1200 °C, about 600 °C to about 800 °C, or about 600 °C to about 700 °C. The second heat treatment time may be suitably or appropriately adjusted depending on the temperature of the second heat treatment, and may be, for example performed within about 20 hours, about 10 to about 20 hours, about 14 to about 18 hours, or about 16 hours.

The step of preparing the second mixture may further include adding a coating material. That is, the step of preparing the second mixture may comprise mixing the first lithium nickel-based composite oxide after the washing, the second lithium compound, and the coating material to obtain the second mixture.

When the second mixture is prepared by further adding the coating material, and a subsequent second heat treatment is performed to obtain a positive electrode active material, the positive electrode active material may comprise a core particle comprising a lithium nickel-based composite oxide, and a coating layer located on a surface of the core particle and comprising coating elements from the coating material. When the positive electrode active material includes the coating layer, surface resistance characteristics may be improved, thereby further enhancing electrical conductivity, initial charge-discharge efficiency, and cycle life.

The coating material is not specifically limited as long as it includes known coating elements. The coating elements may include at least one element selected from the group consisting of Al, B, Ba, Ca, Ce, Co, Cr, Cu, Fe, Mg, Mn, Mo, Nb, Si, Sn, Sr, Ti, V, W, Y, Zn, and Zr. For example, the coating elements may comprise Co, Al, Zr, or a combination thereof. For example, the cobalt material may be a Co-containing hydroxide, a Co-containing oxide, or a Co-containing carbonate, the aluminum material may be an Al-containing hydroxide or an Al-containing oxide, and the zirconium material may be a Zr-containing hydroxide, Zr-containing oxide, or a Zr-containing chloride. For example, the cobalt material may be $Co(OH)_2$, the aluminum material may be AlOOH, $Al_2O_3$, or $Al(OH)_3$, and the zirconium material may be $ZrO_2$, $Zr(OH)_4$, or $ZrOCl_2$. The above examples assume that the coating elements are Co, Al, and Zr, but coating materials for other coating elements described herein may also be freely used as long as they are known materials.

The amount of the coating material may be appropriately adjusted depending on the intended purpose. For example, the coating material may be added so that the amount of the coating elements in the coating material is about 0.01 to about 10 mol relative to 100 mol of total metals excluding lithium in the first lithium nickel-based composite oxide after the washing.

For example, the cobalt material may be added such that the amount of cobalt is about 0.1 to about 5 mol, about 0.1 to about 3 mol, about 0.5 to about 3 mol, about 1 to about 3 mol, or about 2 mol based on 100 mol of total metals excluding lithium in the first lithium nickel-based composite oxide after the washing. The aluminum material may be added such that the amount of aluminum is about 0.01 to about 3 mol, about 0.01 to about 1 mol, about 0.05 to about 1 mol, about 0.1 to about 1 mol, or about 0.5 mol based on 100 mol of total metals excluding lithium. The zirconium material may be added such that the amount of zirconium is about 0.01 to about 1 mol, about 0.01 to about 0.8 mol, about 0.01 to about 0.5 mol, about 0.01 to about 0.3 mol, about 0.05 to about 0.3 mol, about 0.1 to about 0.2 mol, or about 0.15 mol based on 100 mol of total metals excluding lithium.

The positive electrode active material prepared according to the above-described method may be identical in all aspects to the positive electrode active material described herein.

**Positive Electrode Active Material**

In some example embodiments, a positive electrode active material for a rechargeable lithium battery includes a core particle comprising a lithium nickel-based composite oxide represented by Chemical Formula 11; and a coating layer located on a surface of the core particle and comprising one element or a combination thereof selected from the group consisting of Al, B, Ba, Ca, Ce, Co, Cr, Cu, Fe, Mg, Mn, Mo, Nb, Si, Sn, Sr, Ti, V, W, Y, Zn, and Zr, wherein the positive electrode active material has a value defined by Mathematical Formula 1 of greater than or equal to about 5.

Chemical Formula 11          $Li_{a11}Ni_{x11}M^{11}_{y11}M^{12}_{z11}O_{2-b11}X_{b11}$

wherein, in Chemical Formula 11, $0.9 \leq a11 \leq 1.2$, $0.3 \leq x11 < 1$, $0 < y11 \leq 0.7$, $0 \leq z11 \leq 0.7$, $0.9 \leq x11+y11+z11 \leq 1.1$, and $0 \leq b11 \leq 0.11$, $M^{11}$ and $M^{12}$ are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S.

# Mathematical Formula 1

$$\Sigma[Mx\ (EP\text{-}EDS)/\ Mx\ (ICP)]$$

wherein Mx denotes a metal component contained in the coating layer, Mx (EP-EDS) denotes a mol% of the metal component Mx relative to total metals excluding lithium, present on the surface of the positive electrode active material as measured by Electron Probe - Energy Dispersive Spectroscopy (EP-EDS), and Mx (ICP) denotes a mol% of the metal component Mx relative to total metals excluding lithium, present in the entirety (surface and core) of the positive electrode active material as measured by Inductively Coupled Plasma analysis. The metal components refer to the elements included in the coating layer, and may include ordinary metals, transition metals, and metalloids.

In Chemical Formula 11, $0.3 \leq x11 \leq 0.99$, $0.01 \leq y11 \leq 0.7$, and $0 \leq z11 \leq 0.69$; $0.6 \leq x11 < 1$, $0 < y11 \leq 0.4$, and $0 \leq z11 \leq 0.4$; $0.7 \leq x11 < 1$, $0 < y1 \leq 0.3$, and $0 \leq z11 \leq 0.3$; $0.8 \leq x11 < 1$, $0 < y11 \leq 0.2$, and $0 \leq z11 \leq 0.2$; or $0.9 \leq x11 < 1$, $0 < y11 \leq 0.1$, and $0 \leq z11 \leq 0.1$.

The value defined by Mathematical Formula 1 is an indicator representing the relative distribution of metal components coated on the surface of the core particle. In Mathematical Formula 1, Mx may include, in addition to Co, Al, Zr, or a combination thereof, known coating components, and the same formula may be applied. EP-EDS is a surface analysis technique that can determine the presence of metals in the coating layer, and ICP represents an average value for the entire composition of the positive electrode active material. The ratio of these two values indicates the degree to which the metal components are concentrated on the surface of the coating layer. The EP-EDS and ICP measurement methods for the positive electrode active material may be performed in the same manner as described in the following Examples. When the value of $\Sigma[Mx\ (EP\text{-}EDS) / Mx\ (ICP)]$ defined by Mathematical Formula 1 is greater than or equal to about 5, it indicates that the metal components in the coating layer are more concentrated on the surface of the core particle, and that the coating layer has been effectively formed.

The value defined by Mathematical Formula 1 may be about 5 to about 10, about 6 to about 9, about 7 to about 9, about 7 to about 8.5, or about 7 to about 8.

The lithium nickel-based composite oxide may be for example represented by Chemical Formula 12 or 13.

Chemical Formula 12          $Li_{a12}Ni_{x12}Co_{y12}M^{13}_{z12}O_{2-b12}X_{b12}$

In Chemical Formula 12, $0.3 \leq x12 < 1$, $0 < y12 \leq 0.7$, $0 \leq z12 \leq 0.7$, and $0.9 \leq x12+y12+z12 \leq 1.1$, $M^{13}$ is one or more elements selected from Al, B, Ba, Ca, Ce, Cr, Cu, Fe, Mg, Mn, Mo, Nb, Si, Sn, Sr, Ti, V, W, Y, Zr, and Zn, and X is one or more elements selected from F, P, and S.

In Chemical Formula 12, $0.3 \leq x12 \leq 0.99$, $0.01 \leq y12 \leq 0.7$, and $0 \leq z12 \leq 0.69$; $0.6 \leq x12 < 1$, $0 < y12 \leq 0.4$, and $0 \leq z12 \leq 0.4$; $0.7 \leq x12 < 1$, $0 < y12 \leq 0.3$, and $0 \leq z12 \leq 0.3$; $0.8 \leq x12 < 1$, $0 < y12 \leq 0.2$, and $0 \leq z12 \leq 0.2$; or $0.9 \leq x12 < 1$, $0 < y12 \leq 0.1$, and $0 \leq z12 \leq 0.1$.

Chemical Formula 13 $Li_{a13}Ni_{x13}Co_{y13}M^{14}{}_{z13}M^{15}{}_{w13}O_{2-b13}X_{b13}$

In Chemical Formula 13, $0.3 \leq x13 \leq 0.98$, $0.01 \leq y13 \leq 0.69$, $0.01 \leq z13 \leq 0.69$, $0 \leq w13 \leq 0.68$, $0.9 \leq x13+y13+z13+w13 \leq 1.1$, $M^{14}$ is one or more elements selected from Al, Mn, or a combination thereof, $M^{15}$ is one or more elements selected from B, Ba, Ca, Ce, Cr, Cu, Fe, Mg, Mo, Nb, Si, Sn, Sr, Ti, V, W, Y, Zr, and Zn, and X is one or more elements selected from F, P, and S.

In Chemical Formula 13, $0.6 \leq x13 \leq 0.98$, $0.01 \leq y13 \leq 0.39$, $0.01 \leq z13 \leq 0.39$, and $0 \leq w13 \leq 0.38$; $0.8 \leq x13 \leq 0.98$, $0.01 \leq y13 \leq 0.18$, $0.01 \leq z13 \leq 0.18$, and $0 \leq w13 \leq 0.18$; or $0.9 \leq x13 \leq 0.98$, $0.01 \leq y13 \leq 0.08$, $0.01 \leq z13 \leq 0.08$, and $0 \leq w13 \leq 0.08$.

The core particle of the positive electrode active material may be in the form of secondary particles formed by agglomeration of a plurality of primary particles. The average particle diameter ($D_{50}$) of the secondary particles may be for example about 1 μm to about 25 μm, about 2 μm to about 20 μm, about 5 μm to about 18 μm, or about 8 μm to about 16 μm. In embodiments, the term average particle diameter ($D_{50}$) may mean a size of particles having a cumulative volume of 50 volume% in the particle size distribution that is obtained by measuring the size of about 20 particles at random from a scanning electron microscope image.

The core particle of the positive electrode active material may be identical to the positive electrode active material obtained by, in the method for preparing the positive electrode active material described above, preparing a second mixture by mixing the first lithium nickel-based composite oxide after the washing, and the second lithium compound without additionally adding a coating material, and performing a second heat treatment. The positive electrode active material may not include a coating layer located on the surface of the core particle, and even when the positive electrode active material is composed solely of a core particle prepared according to the aforementioned method, structural damage and structural degradation caused by washing can be minimized while improving the capacity and cycle life of a battery. Hereinafter, the properties of the positive electrode active material include both positive electrode active materials composed solely of a core particle without a coating layer and positive electrode active materials comprising a coating layer located on the surface of the core particle.

The BET specific surface area of the positive electrode active material may be less than or equal to about 0.4 m²/g. For example, it may be about 0.15 to about 0.4 m²/g, about 0.2 to about 0.4 m²/g, about 0.25 to about 0.4 m²/g, about 0.3 to about 0.4 m²/g, or about 0.3 to about 0.38 m²/g. The BET specific surface area may be measured by the nitrogen gas adsorption method using a specific surface area measuring apparatus HM model-1208 manufactured by MOUNTECH.

The porosity of the positive electrode active material may be less than or equal to about 0.01 cm³/g. For example, it may be about 0.001 to about 0.01 cm³/g, about 0.002 to about 0.01 cm³/g, about 0.003 to about 0.01 cm³/g, about 0.004 to about 0.01 cm³/g, about 0.005 to about 0.01 cm³/g, about 0.005 to about 0.009 cm³/g, about 0.005 to about 0.008 cm³/g, about 0.005 to about 0.007 cm³/g. For example, the porosity may be measured by performing nitrogen adsorption using a measuring apparatus BELSORP-max from Microtrac Co., Ltd., analyzing the pore distribution in the range of pore diameters from about 2 nm to about 300 nm by the BJH method, and calculating the porosity value.

The electrical conductivity of the positive electrode active material may be about 0.05 S/cm to about 0.15 S/cm. For example, the electrical conductivity of the positive electrode active material may be about 0.05 S/cm to about 0.13 S/cm, or about 0.07 S/cm to about 0.12 S/cm. The electrical conductivity may be measured by measuring the resistivity (e.g., electrical resistivity) of the powder of the positive electrode active material using a powder resistance measuring device, and the reciprocal value of the measured resistivity may be converted into the value of electrical conductivity. For example, the electrical conductivity of the positive electrode active material may be obtained by measuring the resistivity at a point where a powder density (mixture density) of the positive electrode active material reaches 3.3 g/cc using a powder resistance measuring device, and then calculating the reciprocal thereof.

**Positive Electrode**

The positive electrode for a rechargeable lithium battery includes a positive electrode current collector and a positive electrode active material layer on the positive electrode current collector. The positive electrode active material layer includes the positive electrode active material, and may optionally further include a binder, a conductive material (e.g., an electrically conductive material), or a combination thereof.

The positive electrode active material may be the aforementioned positive electrode active material or a positive electrode active material prepared according to the aforementioned method for preparing a positive electrode active material. Example details on the aforementioned positive electrode active material and the method for preparing the aforementioned positive electrode active material have been described above, and thus they may not be repeated below.

The binder serves to attach the positive electrode active material particles well to each other and also to attach the positive electrode active material well to the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

In the positive electrode active material layer, an amount of the binder may be about 1 wt% to about 5 wt% based on 100 wt% of the positive electrode active material layer.

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

In the positive electrode active material layer, an amount of the conductive material may be about 1 wt% to about 5 wt% based on 100 wt% of the positive electrode active material layer.

The positive electrode current collector may include an aluminium foil, but is not limited thereto.

## Rechargeable Lithium Battery

Some example embodiments provide a rechargeable lithium battery including a positive electrode, a negative electrode, and an electrolyte.

The rechargeable lithium battery may have excellent capacity and cycle-life by including the positive electrode including the aforementioned positive electrode active material or positive electrode active material prepared according to the aforementioned method for preparing the positive electrode active material, and the negative electrode.

The rechargeable lithium battery may be, for example, a rechargeable lithium battery including a positive electrode, a negative electrode, a separator between the positive electrode and the negative electrode, and an electrolyte, wherein the electrolyte may be in the form of a liquid or a gel polymer, and/or the like. As another example, the rechargeable lithium battery may be an all-solid-state battery including a positive electrode, a negative electrode, and a solid electrolyte, or may be a semi solid-state battery including a positive electrode, a negative electrode, and a semi solid-state electrolyte. The semi solid-state may mean a state that includes both solid components and liquid components, or a state that is mostly solid but includes some liquid components. The all-solid-state battery and semi solid-state battery may not include a separator. The positive electrode active material according to some example embodiments can realize high capacity due to its shape while realizing very high charge/discharge efficiency and high temperature cycle-life, and is therefore suitable for application to the aforementioned types (or kinds) of batteries and can exhibit excellent performance in each battery.

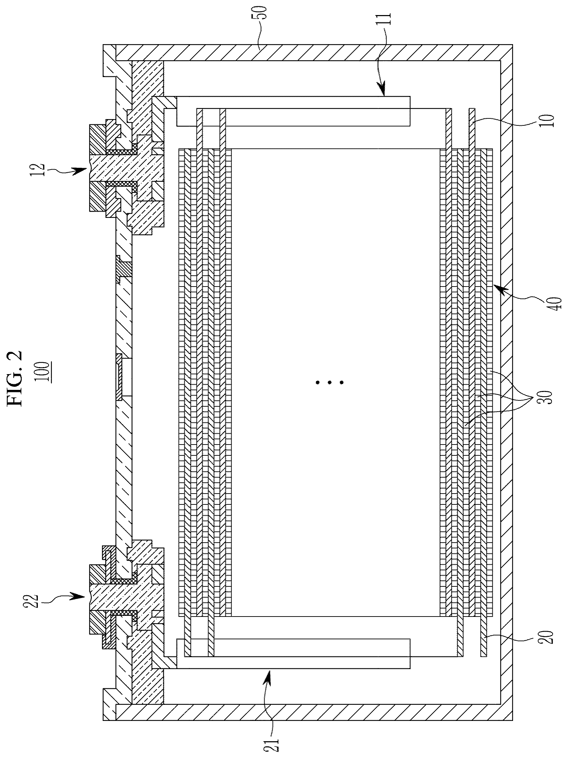

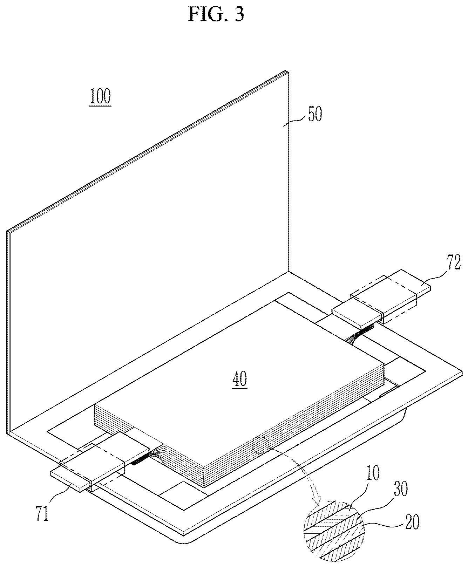

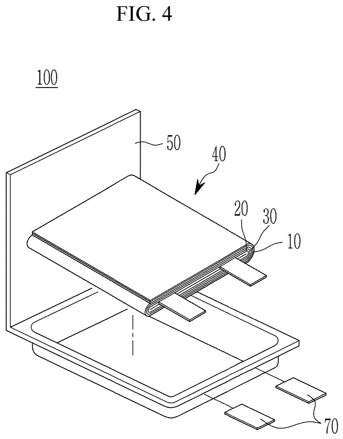

The rechargeable lithium battery may be classified into cylindrical, prismatic, pouch, and coin types (or kinds) depending on its shape. FIGS. 1 to 4 are schematic views illustrating rechargeable lithium batteries according to some example embodiments where FIG. 1 is a cylindrical battery, FIG. 2 is a prismatic battery, and FIGS. 3 and 4 are a pouch-shaped battery. Referring to FIGS. 1 to 4, a rechargeable lithium battery 100 may include an electrode assembly 40 with a separator 30 between a positive electrode 10 and a negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 that serve as an electrical path to induce the current formed in the electrode assembly 40 to the outside.

## Negative Electrode

The negative electrode for a rechargeable lithium battery includes a negative electrode current collector, and a negative electrode active material layer on the negative electrode current collector. The negative electrode active material layer includes a negative electrode active material, and may optionally further include a binder, a conductive material (e.g., an electrically conductive material), or a combination thereof.

The negative electrode active material may include a material capable of reversibly intercalating/deintercalating lithium ions, lithium metal, an alloy of lithium metal, a material capable of doping and dedoping lithium, and/or a transition metal oxide.

The material capable of reversibly intercalating/deintercalating the lithium ions may be a carbon-based negative electrode active material.

The carbon-based negative electrode active material may include crystalline carbon, amorphous carbon, or a combination thereof. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like. The soft carbon refers to a carbon material that can be graphitized, and is a material that is easily graphitized by heat treatment at a high temperature, for example, about 2800 °C. The hard carbon is a carbon material that cannot be graphitized or is finely (e.g., slightly) graphitized by heat treatment.

The negative electrode active material layer may further include other types (or kinds) of negative electrode active materials in addition to the carbon-based negative electrode active material, and may further include, for example, a lithium metal, an alloy of lithium metal, and/or a material capable of doping and dedoping lithium.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$, e.g., $SiO_2$), and/or a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof), and the Sn-based negative electrode active material may include Sn, $SnO_x$ ($0<x\leq2$, e.g., $SnO_2$), and/or a Sn-R alloy (wherein R is an element selected from an alkali metal, an alkaline-earth metal, a Group 13 element, a Group 14 element (excluding Sn), a Group 15 element, a Group 16 element, a transition metal, a rare earth element, and a combination thereof). At least one of the foregoing may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the negative electrode active material may include silicon-carbon composite particles. An average particle diameter ($D_{50}$) of the silicon-carbon composite particles may be, for example, about 0.5 $\mu$m to about 20 $\mu$m. The average particle diameter ($D_{50}$) may be measured with a particle size analyzer and means a diameter of particles with a cumulative volume of 50 volume% in the particle size distribution. The silicon may be included in an amount of about 10 wt% to about 60 wt% and the carbon may be included in an amount of about 40 wt% to about 90 wt% based on 100 wt% of the silicon-carbon composite particles. For example, the silicon-carbon composite particles may include a core including silicon particles, and a carbon coating layer on the surface of the core. An average particle diameter ($D_{50}$) of the silicon particles may be 10 nm to 1 $\mu$m or 10 nm to 200 nm in the core. The silicon particles may exist as silicon alone, in the form of a silicon alloy, and/or in an oxidized form of silicon. The oxidized form of silicon may be represented by $SiO_x$ ($0<x\leq2$, e.g., $SiO_2$). In embodiments, a thickness of the carbon coating layer may be about 5 nm to about 100 nm.

As an example, the silicon-carbon composite particles may include a core including silicon particles and crystalline carbon, and a carbon coating layer on the surface of the core and including amorphous carbon. For example, in the silicon-carbon composite particles, amorphous carbon may not exist in the core but only in the carbon coating layer. The crystalline carbon may be artificial graphite, natural graphite, or a combination thereof, and the amorphous carbon may be formed from coal-based pitch, mesophase pitch, petroleum-based pitch, coal-based oil, petroleum-based heavy oil, and/or a polymer resin (phenol resin, furan resin, polyimide resin, and/or the like). In embodiments, an amount of the crystalline carbon may be about 10 wt% to about 70 wt% and an amount of the amorphous carbon may be about 20 wt% to about 40 wt% based on 100 wt% of the silicon-carbon composite particles.

In the silicon-carbon composite particle, the core may include pores in the center. A radius of the pore may be about 30 length% to about 50 length% based on 100 length % of the radius of the silicon-carbon composite particle.

The aforementioned silicon-carbon composite particles effectively suppress or reduce problems such as volume expansion, structural collapse, and/or particle crushing due to charging and discharging, prevent or reduce disconnection of conductive paths (e.g., electrically conductive paths), achieve high capacity and high efficiency, and is advantageous or beneficial to use under a high-voltage or high-rate charging conditions.

The Si-based negative electrode active material and/or Sn-based negative electrode active material may be mixed with the carbon-based negative electrode active material. A mixing ratio of the Si-based negative electrode active material or Sn-based negative electrode active material and the carbon-based negative electrode active material may be about 1:99 to about 90:10 by weight.

In the negative electrode active material layer, the negative electrode active material may be included in an amount of about 95 wt% to about 99 wt% based on 100 wt% of the negative electrode active material layer.

The negative electrode active material layer may optionally further include a binder, a conductive material (e.g., an electrically conductive material), or a combination thereof, together with the negative electrode active material.

The binder serves to well adhere the negative electrode active material particles to each other and also to adhere the negative electrode active material to the negative electrode current collector. The binder may be a water-insoluble binder, a water-soluble binder, or a combination thereof.

The water-insoluble binder may include polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder and/or a polymer resin-based binder. The rubber-based binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin-based binder may be selected from polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If (e.g., when) a water-soluble binder is used as the binder in the negative electrode active material layer, a cellulose-based compound may be further included as a thickener capable of imparting or increasing viscosity. As the cellulose-based compound, one or more types (or kinds), such as carboxymethyl cellulose, hydroxypropyl methyl cellulose, methyl cellulose, and/or alkali metal salts thereof, may be mixed and used. The alkali metal may be Na, K, and/or Li. An amount of such a thickener used may be about 0.1 to 3 parts by weight based on 100 parts by weight of the negative electrode active material.

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material may include a carbon-based material such as natural graphite, artificial graphite, carbon black, acetylene black, Ketjen black, a carbon fiber, and a carbon nanotube; a metal-based material in the form of a metal powder and/or a metal fiber, including copper, nickel, aluminium, and/or silver; a conductive polymer (e.g., an electrically conductive polymer) such as a polyphenylene derivative; or a mixture thereof.

An amount of the binder in the negative electrode active material layer may be about 1 wt% to about 5 wt% based on 100 wt% of the negative electrode active material layer. In embodiments, if (e.g., when) the conductive material is further included, the negative electrode active material layer may include about 90 to about 98 wt% of the negative electrode active material, about 1 to about 5 wt% of the binder, and about 1 to about 5 wt% of the conductive material based on 100 wt% of the negative electrode active material layer.

The negative electrode current collector may be selected from copper foil, nickel foil, stainless steel foil, titanium foil, nickel foam, copper foam, a polymer substrate coated with a conductive metal (e.g., an electrically conductive metal), and a combination thereof.

**Electrolyte**

The rechargeable lithium battery may further include an electrolyte.

For example, the electrolyte for a rechargeable lithium battery may be an electrolyte solution, which includes a non-aqueous organic solvent and a lithium salt.

The non-aqueous organic solvent serves as a medium to transmit ions taking part in the electrochemical reaction of a battery.

The non-aqueous organic solvent may be a carbonate-based solvent, ester-based solvent, ether-based solvent, ketone-based solvent, and/or an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds).

If (e.g., when) using the carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

**Separator**

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON®), or a copolymer or mixture of two or more thereof.

The organic material may include a polyvinylidene fluoride-based polymer and/or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Example 1

(1) Manufacturing of Positive Electrode Active Material

Step of obtaining a first lithium nickel-based composite oxide

A first mixture was prepared by mixing a nickel-based composite hydroxide ($Ni_{0.93}Co_{0.04}Mn_{0.03}(OH)_2$) with LiOH as a first lithium compound. During the preparation of the first mixture, the nickel-based composite hydroxide ($Ni_{0.93}Co_{0.04}Mn_{0.03}(OH)_2$) and the first lithium compound was mixed so that the molar ratio of lithium from the first lithium compound to the total metals of the nickel-based composite hydroxide was about 1.05. The first mixture was then subjected to a first heat treatment at 750 °C for 16 hours in an oxygen atmosphere to obtain a first lithium nickel-based composite oxide ($LiNi_{0.93}Co_{0.04}Mn_{0.03}O_2$). The obtained first lithium nickel-based composite oxide had a secondary particle in which a plurality of primary particles were aggregated, and the average particle diameter ($D_{50}$) of the secondary particles was about 13.5 $\mu$m.

Step of washing the first lithium nickel-based composite oxide with an aqueous solvent

The obtained first lithium nickel-based composite oxide was crushed and filtered, and then added to distilled water as an aqueous solvent in an amount of 50 parts by weight based on 100 parts by weight of the first lithium nickel-based composite oxide to carry out a washing. The washing was performed for about 5 minutes from the time the first lithium nickel-based composite oxide was added into distilled water, thereby removing residual lithium from the surface of the first lithium nickel-based composite oxide. Subsequently, the material was dried at 190 °C for 12 hours to obtain a first lithium nickel-based composite oxide after the washing ($LiNi_{0.93}Co_{0.04}Mn_{0.03}O_2$). The first lithium nickel-based composite oxide after the washing maintained a secondary particle form in which a plurality of primary particles were aggregated.

Step of obtaining a positive electrode active material

The first lithium nickel-based composite oxide after the washing and LiOH as a second lithium compound were mixed to prepare a second mixture. During the preparation of the second mixture, the lithium from the second lithium compound was mixed such that it was about 1 mol based on 100 mol of total metals excluding lithium in the first lithium nickel-based composite oxide after the washing. The second mixture was then subjected to a second heat treatment at 680 °C for 16 hours in an oxygen atmosphere to obtain a positive electrode active material. The positive electrode active material had a composition of $LiNi_{0.93}Co_{0.04}Mn_{0.03}O_2$, a secondary particle in which a plurality of primary particles were aggregated, and an average particle diameter ($D_{50}$) of the secondary particles of about 13.5 $\mu$m.

(2) Manufacturing of Positive Electrode

The obtained positive electrode active material, polyvinylidene fluoride as a binder, and carbon nanotube as a conductive material were mixed in a weight ratio of 98.5:1:0.5 (positive electrode active material:binder:conductive material) to prepare a positive electrode active material composition. This positive electrode active material composition was dispersed in a n N-methyl pyrrolidone solvent to prepare a positive electrode active material slurry, which was coated to be on an Al foil and sequentially, dried and compressed to manufacture a positive electrode.

(3) Manufacturing of Rechargeable Lithium Battery

A coin half-cell was prepared using the manufactured positive electrode and a lithium metal counter electrode, with a polyethylene-polypropylene multilayer separator interposed therebetween, and an electrolyte prepared by dissolving 1.0 M of a lithium salt, $LiPF_6$, in a solvent obtained by mixing ethylene carbonate and diethyl carbonate at a volume ratio of 50:50 was injected.

**Example 2**

The positive electrode active material, the positive electrode, and the lithium secondary battery were manufactured in substantially the same manner as in Example 1, except that, in the step of obtaining the positive electrode active material in "(1) Manufacturing of Positive Electrode Active Material", the lithium from the second lithium compound was mixed, in preparing the second mixture, such that it was about 1 mol based on 100 mol of total metals excluding lithium in the first lithium nickel-based composite oxide after the washing.

**Example 3**

The positive electrode active material, the positive electrode, and the lithium secondary battery were manufactured in substantially the same manner as in Example 1, except that, in the step of washing the first lithium nickel-based composite oxide with an aqueous solvent in "(1) Manufacturing of Positive Electrode Active Material", the washing was performed by stirring for about 30 minutes after adding the first lithium nickel-based composite oxide into distilled water.

**Example 4**

The positive electrode active material, the positive electrode, and the lithium secondary battery were manufactured in substantially the same manner as in Example 1, except that, in the step of obtaining the positive electrode active material in "(1) Manufacturing of Positive Electrode Active Material", the lithium from the second lithium compound was mixed, in preparing the second mixture, such that it was about 5 mol based on 100 mol of total metals excluding lithium in the first lithium nickel-based composite oxide after the washing, and cobalt hydroxide $(Co(OH)_2)$ as a cobalt material, aluminum oxyhydroxide (AIOOH) as an aluminum material, and zirconium dioxide $(ZrO_2)$ as a zirconium material were further added and mixed. In this case, the cobalt from the cobalt material was added in an amount of about 2 mol, the aluminum from the aluminum material was added in an amount of about 0.5 mol, and the zirconium from the zirconium material was added in an amount of about 0.15 mol, each based on 100 mol of total metals excluding lithium in the first lithium nickel-based composite oxide after the washing.

The positive electrode active material manufactured according to the above method had a core particle having composition of $LiNi_{0.93}Co_{0.04}Mn_{0.03}O_2$, a form of secondary particles in which a plurality of primary particles were aggregated, and an average particle diameter $(D_{50})$ of the secondary particles of about 13.5 $\mu$m, and a coating layer including Co, Al, and Zr formed on the surface of the core particle.

**Comparative Example 1**

The positive electrode active material, the positive electrode, and the lithium secondary battery were manufactured in substantially the same manner as in Example 1, except that, in the step of washing the first lithium nickel-based composite oxide with an aqueous solvent in "(1) Manufacturing of Positive Electrode Active Material", the washing was performed by adding 100 parts by weight of distilled water based on 100 parts by weight of the first lithium nickel-based composite oxide.

**Comparative Example 2**

The positive electrode active material, the positive electrode, and the lithium secondary battery were manufactured in substantially the same manner as in Example 1, except that, in the step of washing the first lithium nickel-based composite oxide with an aqueous solvent in "(1) Manufacturing of Positive Electrode Active Material", the washing was performed by adding 100 parts by weight of distilled water based on 100 parts by weight of the first lithium nickel-based composite oxide and stirring for about 30 minutes from the time of addition.

**Comparative Example 3**

The positive electrode active material, the positive electrode, and the lithium secondary battery were manufactured in substantially the same manner as in Example 1, except that, in the step of obtaining a positive electrode active material in "(1) Manufacturing of Positive Electrode Active Material", instead of preparing the second mixture by mixing the first lithium nickel-based composite oxide after the washing and LiOH as a second lithium compound, the first lithium nickel-based composite oxide after the washing was subjected directly to the secondary heat treatment.

**Comparative Example 4**

The positive electrode active material, the positive electrode, and the lithium secondary battery were manufactured in substantially the same manner as in Example 1, except that, (i) in the step of washing the first lithium nickel-based composite oxide with an aqueous solvent in "(1) Manufacturing of Positive Electrode Active Material", the washing was performed by adding 100 parts by weight of distilled water based on 100 parts by weight of the first lithium nickel-based composite oxide and stirring for about 30 minutes from the time of addition, and (ii) in step of obtaining a positive electrode active material, during the preparation of the second mixture, the lithium of the second lithium compound was mixed to be about 5 mol based on 100 mol excluding lithium in the first lithium nickel-based composite oxide after the washing, and $Co(OH)_2$ as a cobalt material, AlOOH as an aluminum material, and $ZrO_2$ as a zirconium material were further added and mixed. In this case, the cobalt from the cobalt material was added in an amount of about 2 mol, the aluminum from the aluminum material was added in an amount of about 0.5 mol, and the zirconium from the zirconium material was added in an amount of about 0.15 mol, each based on 100 mol of total metals excluding lithium in the first lithium nickel-based composite oxide after the washing.

The positive electrode active material manufactured according to the above method had a core particle having composition of $LiNi_{0.93}Co_{0.04}Mn_{0.03}O_2$, a form of secondary particles in which a plurality of primary particles were aggregated, and an average particle diameter ($D_{50}$) of the secondary particles of about 13.5 $\mu$m, and a coating layer including Co, Al, and Zr formed on the surface of the core particle.

**Evaluation Example** 1: **BET Specific Surface Area Evaluation**

BET specific surface areas were measured of each of the first lithium nickel-based composite oxide obtained before washing (hereinafter, "before washing first lithium nickel-based composite oxide") obtained in Examples 1 to 4 and Comparative Examples 1 to 4, the first lithium nickel-based composite oxide after the washing obtained in Examples 1 to 4 and Comparative Examples 1 to 4, and the positive electrode active material obtained in Examples 1 to 4 and Comparative Examples 1 to 4, and the results are shown in Tables 1 and 2 below.
BET specific surface area was measured using a specific surface area measurement device HM model-1208 manufactured by MOUNTECH via nitrogen gas adsorption. Specifically, 0.3 g samples of each of before washing first lithium nickel-based composite oxide, the first lithium nickel-based composite oxide after the washing, and the positive electrode active material from Examples 1 to 4 and Comparative Examples 1 to 4 were pretreated at 300°C in nitrogen atmosphere for 1 hour, followed by an additional 15-minute pretreatment at 300°C in the surface area measurement device. The samples were cooled to liquid nitrogen temperature and saturated with a gas mixture of 30% nitrogen and 70% helium. Subsequently, desorption was performed by heating to room temperature and the amount of desorbed gas was measured. The specific surface area was calculated by the conventional BET method from the obtained data.

**Evaluation Example 2: Porosity Measurement**

Porosity of each of the first lithium nickel-based composite oxide after the washing obtained in Examples 1 to 4 and Comparative Examples 1 to 4, and the positive electrode active material obtained in Examples 1 to 4 and Comparative Examples 1 to 4 was calculated via BJH (Barrett-Joyner-Halenda) analysis. The results are shown in Tables 1 and 2.
Specifically, nitrogen adsorption measurements were performed using a BELSORP-max device manufactured by Microtrac, analyzing the pore distribution in the range of pore diameters between 2 nm and 300 nm by BJH method to calculate the porosity value.

**Evaluation Example 3: Cation Mixing Analysis**

Cation mixing values of the first lithium nickel-based composite oxide after the washing obtained in Examples 1 to 4 and Comparative Examples 1 to 4 were analyzed by X-ray diffraction (XRD) using Cu-K$\alpha$ radiation. The obtained

diffraction profiles were refined by Rietveld refinement, and the calculated cation mixing values are shown in Table 1.

### Evaluation Example 4: Residual Lithium Content Measurement

Residual lithium content on the surface of the first lithium nickel-based composite oxide after the washing obtained in Examples 1 to 4 and Comparative Examples 1 to 4 was measured by acid-base titration using diluted hydrochloric acid (HCl). The results are shown in Table 1. Residual lithium content is expressed based on 100 parts by weight of the first lithium nickel-based composite oxide after the washing.

### Evaluation Example 5: Electrical Conductivity Measurement

Electrical conductivities of each of the first lithium nickel-based composite oxide after the washing in Examples 1 to 4 and Comparative Examples 1 to 4 and the positive electrode active materials obtained in Examples 1 to 4 and Comparative Examples 1 to 4 were measured. Specifically, resistivity was measured at a powder density of 3.3 g/cc using a powder resistance measurement device Loresta-GXII manufactured by Nittoseiko Analytech. Electrical conductivity values were calculated by taking the reciprocal of the measured resistivity. The results are shown in Tables 1 and 2.

### Evaluation Example 6: Initial Charge-Discharge Capacity and Efficiency

Coin half-cells including the positive electrode active materials obtained in Examples 1 to 4 and Comparative Examples 1 to 4 were prepared. Initial charge-discharge tests were performed by charging at a constant current of 0.2 C-rate up to an upper voltage limit of 4.3 V, then constant voltage charging at 0.05 C-rate, followed by discharging at 0.2 C-rate down to a cut-off voltage of 3.0 V at 25°C. Initial charge capacity, initial discharge capacity, and the efficiency calculated as the ratio of discharge capacity to charge capacity are shown in Table 2.

### Evaluation Example 7: High-Temperature Lifespan Evaluation

After the initial charge-discharge test described in Evaluation Example 6, coin half-cells including positive electrode active materials obtained in Examples 1 to 4 and Comparative Examples 1 to 4 were subjected to 50 or more cycles of charging and discharging at 1.0 C-rate in a voltage range of 3.0 V to 4.3 V at 45°C. The ratio of the 50th cycle discharge capacity to the initial discharge capacity (capacity retention) is shown in Table 2.

### Evaluation Example 8: ICP and EP-EDS Evaluation of the Positive Electrode Active Material

For the positive electrode active materials obtained in Examples 1 to 4 and Comparative Examples 1 to 4, inductively coupled plasma (ICP) analysis and electron probe energy dispersive X-ray spectroscopy (EP-EDS) analysis were performed to confirm the composition of the entire positive electrode active material and the composition at the surface of the positive electrode active material, respectively.

Specifically, 0.2 g of the positive electrode active material samples obtained in Example 4 and Comparative Example 4 were dispersed on carbon tape, and the types and contents of elements in the entire positive electrode active material were analyzed using an Agilent 5800 inductively coupled plasma spectrometer (Agilent Technologies).

In addition, 0.2 g of the positive electrode active material samples obtained in Example 4 and Comparative Example 4 were dispersed on carbon tape, and the samples were irradiated with an acceleration voltage of 15 keV using a Helios G4 HX scanning electron microscope (Thermo Fisher Scientific), and the emitted X-rays were detected to analyze the types and contents of elements at the surface of the positive electrode active material.

The results of the ICP analysis and EP-EDS analysis for the positive electrode active materials obtained in Example 4 and Comparative Example 4 are shown in Table 1. The content of each element is expressed as the molar percentage of the metal relative to the total metals excluding lithium in the positive electrode active material. Using these analysis results, the EP-EDS/ICP values for each metal component are also shown in Table 1, and the values calculated using Equation 1 are additionally presented.

Table 1

| | The first lithium nickel-based composit e oxide before washing | The first lithium nickel-based composite oxide after the washing | | | | |
|---|---|---|---|---|---|---|
| | BET Specific Surface Area ($m^2$/g) | BET Specific Surface Area ($m^2$/g) | Porosity ($cm^3$/g) | Cation Mixing (%) | Residual Lithium Content (wt%) | Electrical Conductivity (S/cm) |
| Example 1 | 0.3 | 1.2 | 0.06 | 1.34 | 0.115 | 0.194 |
| Example 2 | | 1.2 | 0.06 | 1.34 | 0.115 | 0.194 |
| Example 3 | | 1.4 | 0.08 | 1.37 | 0.109 | 0.206 |
| Example 4 | | 1.2 | 0.06 | 1.34 | 0.115 | 0.194 |
| Comparative Example 1 | | 2.1 | 0.17 | 1.52 | 0.088 | 0.231 |
| Comparative Example 2 | | 2.5 | 0.23 | 1.61 | 0.083 | 0.236 |
| Comparative Example 3 | | 1.2 | 0.06 | 1.34 | 0.115 | 0.194 |
| Comparative Example 4 | | 2.5 | 0.23 | 1.61 | 0.083 | 0.236 |

Referring to Table 1, it can be confirmed that the BET specific surface area of the first lithium nickel-based composite oxide after the washing is greater than that of the first lithium nickel-based composite oxide before the washing. The BET specific surface area can be used as an indicator representing the degree of structural damage of the positive electrode active material caused during the washing, and, as pores are formed inside the structure of the first lithium nickel-based composite oxide according to the washing, resulting in an increase in the BET specific surface area of the first lithium nickel-based composite oxide after the washing in both the examples and comparative examples. Meanwhile, in Comparative Examples 1, 2, and 5, where 100 parts by weight of distilled water was added based on 100 parts by weight of the first lithium nickel-based composite oxide for the washing, the BET specific surface area, porosity, cation mixing, and electrical conductivity values of the first lithium nickel-based composite oxide after the washing were higher, and the residual lithium content was lower, compared to those of the first lithium nickel-based composite oxide after the washing in Examples 1 to 4 and Comparative Examples 3 and 4, where 50 parts by weight of distilled water was added based on 100 parts by weight of the first lithium nickel-based composite oxide.

Table 2

| | Positive electrode active material | | | | | | |
|---|---|---|---|---|---|---|---|
| | BET Specific Surface Area ($m^2$/g) | Porosity ($cm^3$/g) | Electrica l Conducti vity (S/cm) | Initial Charge Capacity (mAh/g) | Initial Discharg e Capacity (mAh/g) | Initial Efficienc y (%) | High-Temper ature Lifespan (%) |
| Example 1 | 0.3 | 0.006 | 0.07 | 243.5 | 216.5 | 88.9 | 95 |
| Example 2 | 0.31 | 0.005 | 0.08 | 243.9 | 216.3 | 88.7 | 95 |
| Example 3 | 0.33 | 0.006 | 0.07 | 242.9 | 215.2 | 88.6 | 96 |
| Example 4 | 0.38 | 0.007 | 0.12 | 240.9 | 215.7 | 89.5 | 97 |
| Compar ative Example 1 | 0.38 | 0.011 | 0.08 | 241.5 | 210.5 | 87.2 | 89 |
| Compar ative Example 2 | 0.4 | 0.016 | 0.08 | 240.8 | 209.8 | 87.1 | 87 |
| Compar ative Example 3 | 0.3 | 0.008 | 0.08 | 242.8 | 213.8 | 88.1 | 90 |
| Compar ative Example 4 | 0.43 | 0.019 | 0.15 | 238.6 | 213.4 | 89.4 | 94 |

Referring to Table 2, the physical properties and evaluation results of the final positive electrode active material after the secondary heat treatment were confirmed.

In Examples 1 to 3, where 50 parts by weight of distilled water based on 100 parts by weight of the first lithium nickel-based composite oxide were added during the washing, and lithium from lithium hydroxide was added in an amount of 0.5 to 10 mol parts based on 100 mol parts of the total metals excluding lithium in the first lithium nickel-based composite oxide after the washing during the secondary heat treatment, it was confirmed that high initial charge-discharge efficiency and capacity retention were achieved.

In Comparative Example 3, where 50 parts by weight of distilled water based on 100 parts by weight of the first lithium nickel-based composite oxide were added during the washing, it was confirmed that the structural damage caused by washing was less than in Comparative Examples 1 and 2, where 100 parts by weight of distilled water were added, resulting in relatively higher initial charge-discharge efficiency and capacity retention.

However, in Comparative Example 3, where no lithium hydroxide was added during the secondary heat treatment, it was confirmed that the initial charge-discharge efficiency and capacity retention were lower than those of Examples 1 to 3, where an appropriate amount of lithium hydroxide was added.

Meanwhile, in Example 4, where the first lithium nickel-based composite oxide was subjected to the secondary heat treatment under the same washing conditions as in Examples 1 and 2, with lithium from lithium hydroxide added in an amount of 5 mol parts and coating precursors simultaneously added to form a coating layer, it was confirmed that, despite the higher lithium hydroxide content compared to Examples 1 to 3, no deterioration in electrical conductivity was observed, and furthermore, the initial charge-discharge efficiency and high-temperature lifespan characteristics were further improved compared to Examples 1 to 4.

In Comparative Example 4, where the first lithium nickel-based composite oxide was washed under the same conditions as Comparative Example 2, followed by secondary heat treatment with lithium hydroxide added in the same amount as in Example 4 and coating precursors simultaneously introduced, it was confirmed that excessive addition of 100 parts by weight of distilled water during the washing led to structural damage, as indicated by BET specific surface area and porosity values similar to those of Comparative Example 2. However, the formation of the coating layer improved electrical conductivity and battery performance compared to Comparative Example 2 and other comparative examples. However, it was confirmed that Comparative Example 4 exhibited inferior electrical conductivity and battery performance compared to Example 4, where the coating layer was formed with the same coating precursors and coating amount.

Table 3

| | ICP | | | EP-EDS | | | EP-EDS/ICP | | | Value of Equation 1 |
|---|---|---|---|---|---|---|---|---|---|---|
| | Co (mol %) | Al (mol %) | Zr (mol %) | Co (mol %) | Al (mol %) | Zr (mol %) | C o | Al | Zr | |
| Example 4 | 6.9 | 0.5 | 0.2 | 22.4 | 0.8 | 0.5 | 3. 2 | 1. 6 | 2. 6 | 7.4 |
| Comparati ve Example 4 | 6.9 | 0.5 | 0.2 | 16.9 | 0.6 | 0.3 | 2. 4 | 1. 1 | 1. 4 | 4.9 |

Referring to Table 3, it was confirmed that, although only the washing conditions were varied while keeping the amount of coating precursors constant, the positive electrode active material of Example 4 exhibited a better formation of the coating precursors on the particle surfaces than that of Comparative Example 4. In Example 4, 50 parts by weight of distilled water were added per 100 parts by weight of the first lithium nickel-based composite oxide, and the washing time was controlled to 5 minutes, whereas in Comparative Example 4, 100 parts by weight of distilled water were added per 100 parts by weight of the first lithium nickel-based composite oxide, and the washing time was set to 30 minutes. In Example 4, the amount of distilled water and the washing time were appropriately controlled, whereas in Comparative Example 4, an excessive amount of distilled water was used with a longer washing time than in Example 4. As a result, Comparative Example 4 caused greater structural damage to the first lithium nickel-based composite oxide after washing compared to Example 1, and even under the same coating conditions, the coating precursors were not properly formed on the particle surfaces.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the scope of the appended claims, and equivalents thereof.

Description of Symbols

|       |                            |      |                            |
|-------|----------------------------|------|----------------------------|
| 100:  | rechargeable lithium battery | 10:  | positive electrode         |
| 11:   | positive electrode lead tab | 12:  | positive electrode terminal |
| 20:   | negative electrode         | 21:  | negative electrode lead tab |
| 22:   | negative electrode terminal | 30:  | separator                  |
| 40:   | electrode assembly         | 50:  | case                       |
| 60:   | sealing member             | 70:  | electrode tab              |
| 71:   | positive electrode tab     | 72:  | negative electrode tab     |

**Claims**

1. A positive electrode active material for a rechargeable lithium battery, comprising:

   a core particle comprising a lithium nickel-based composite oxide represented by Chemical Formula 11; and
   a coating layer located on a surface of the core particle and comprising one element or a combination thereof selected from the group consisting of Al, B, Ba, Ca, Ce, Co, Cr, Cu, Fe, Mg, Mn, Mo, Nb, Si, Sn, Sr, Ti, V, W, Y, Zn, and Zr,
   wherein the positive electrode active material has a value defined by Mathematical Formula 1 of greater than or equal to about 5:

   Chemical Formula 11     $Li_{a11}Ni_{x11}M^{11}_{y11}M^{12}_{z11}O_{2-b11}X_{b11}$

   wherein, in Chemical Formula 11, $0.9 \leq a11 \leq 1.2$, $0.3 \leq x11 < 1$, $0 < y11 \leq 0.7$, $0 \leq z11 \leq 0.7$, $0.9 \leq x11+y11+z11 \leq 1.1$, and $0 \leq b11 \leq 0.11$, $M^{11}$ and $M^{12}$ are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S,

   $$\text{Mathematical Formula 1}$$

   $$\Sigma[Mx \ (EP\text{-}EDS)/ \ Mx \ (ICP)]$$

   wherein Mx denotes a metal component contained in the coating layer, Mx (EP-EDS) denotes a mol% of the metal component Mx relative to total metals excluding lithium, present on the surface of the positive electrode active material as measured by Electron Probe - Energy Dispersive Spectroscopy (EP-EDS), and Mx (ICP) denotes a mol% of the metal component Mx relative to total metals excluding lithium, present in the entirety (surface and core) of the positive electrode active material as measured by Inductively Coupled Plasma analysis.

2. A positive electrode active material claimed in claim 1, wherein:
   a BET specific surface area of the positive electrode active material is less than or equal to about 0.4 $m^2$/g.

3. A positive electrode active material claimed in claim 1 or claim 2, wherein:
   a porosity of the positive electrode active material is less than or equal to about 0.01 $cm^3$/g.

4. A positive electrode active material claimed in any one of claims 1 to 3, wherein:
   an electrical conductivity of the positive electrode active material is about 0.05 S/cm to about 0,15 S/cm.

5. A method for preparing a positive electrode active material for a rechargeable lithium battery, comprising:

   mixing a nickel-based composite hydroxide and a first lithium compound to prepare a first mixture;
   subjecting the first mixture to a first heat treatment to obtain a first lithium nickel-based composite oxide;
   washing the first lithium nickel-based composite oxide with an aqueous solvent;
   mixing the first lithium nickel-based composite oxide and a second lithium compound after washing to prepare a second mixture; and
   subjecting the second mixture to a second heat treatment to obtain a positive electrode active material;
   wherein after the washing, the first lithium nickel-based composite oxide has a BET specific surface area of about 0.3 $m^2$/g to about 2.0 $m^2$/g and a porosity of about 0.01 $cm^3$/g to about 0.15 $cm^3$/g.

6. The method as claimed in claim 5, wherein:

the nickel-based composite hydroxide is represented by Chemical Formula 1:

$$\text{Chemical Formula 1} \qquad Ni_{x1}M^1_{y1}M^2_{z1}(OH)_2$$

wherein, in Chemical Formula 1, $0.3 \leq x1 < 1$, $0 < y1 \leq 0.7$, $0 \leq z1 \leq 0.7$, and $0.9 \leq x1+y1+z1 \leq 1.1$, and $M^1$ and $M^2$ are each independently one or more elements selected from Al, B, Ba, Ca, Ce, Co, Cr, Cu, Fe, Mg, Mn, Mo, Nb, Si, Sn, Sr, Ti, V, W, Y, Zr, and Zn.

7. The method as claimed in claim 5 or claim 6, wherein:

mixing a nickel-based composite hydroxide and a first lithium compound to prepare a first mixture, wherein the nickel-based composite hydroxide and the first lithium compound are mixed so that the molar ratio of lithium from the first lithium compound to the total metal of the nickel-based composite hydroxide is 0.9 to 1.1.

8. The method as claimed in any one of claims 5 to 7, wherein:
a BET specific surface area of the first lithium nickel-based composite oxide before the washing is about 0.1 m²/g to about 0.4 m²/g.

9. The method as claimed in any one of claims 5 to 8, wherein:

the aqueous solvent is water,
an amount of water during the washing is about 10 to about 90 parts by weight based on 100 parts by weight of the first lithium nickel-based composite oxide.

10. The method as claimed in any one of claims 5 to 9, wherein:
a cation mixing value of the first lithium nickel composite oxide after the washing measured by X-ray diffraction analysis is about 1% to about 2%.

11. The method as claimed in any one of claims 5 to 10, wherein:
a residual lithium content in the first lithium nickel-based composite oxide after the washing is about 0.1 wt% to about 0.2 wt% based on 100 wt% of the first lithium nickel-based composite oxide after the washing.

12. The method as claimed in any one of claims 5 to 11, wherein:
an electrical conductivity of the first lithium nickel-based composite oxide after the washing is about 0.1 S/cm to about 0.22 S/cm.

13. The method as claimed in any one of claims 5 to 12, wherein:
the first lithium nickel-based composite oxide and the second lithium compound are mixed so that lithium is present in an amount of about 0.5 parts by mole to about 10 parts by mole based on 100 parts by mole of total metals excluding lithium in the first lithium nickel-based composite oxide after the washing.

14. The method as claimed in any one of claims 5 to 13, wherein:
the second heat treatment is performed within about 20 hours within a range of about 600 °C to about 1200 °C in an oxidizing gas atmosphere.

15. A rechargeable lithium battery, comprising:
a positive electrode, comprising:

a positive electrode current collector, and a positive electrode active material layer on the positive electrode current collector,
wherein the positive electrode active material layer includes the positive electrode active material as claimed in any one of claims 1 to 4 or the positive electrode active material by the method as claimed in any one of claims 5 to 14,
a negative electrode, and
an electrolyte.

# FIG. 1

## FIG. 2

<u>100</u>

FIG. 3

FIG. 4